Europäisches Patentamt

European Patent Office

Office européen des brevets

(11) Publication number: **0 010 887**
**A1**

(12) **EUROPEAN PATENT APPLICATION**

(21) Application number: 79302192.4

(22) Date of filing: 12.10.79

(51) Int. Cl.³: **B 29 F 1/022**, B 29 G 3/00

(30) Priority: 16.10.78 US 951682

(43) Date of publication of application: 14.05.80
**Bulletin 80/10**

(84) Designated Contracting States: **CH DE FR GB IT**

(71) Applicant: **HOOKER CHEMICALS & PLASTICS CORP.,
P.O.Box 189 345, Third Street, Niagara Falls New
York 14302 (US)**

(72) Inventor: **Bainbridge, Robert W., 114 Woodlake Drive,
Gainsville, Georgia 30501 (US)**

(74) Representative: **Myerscough, Philip Boyd et al,
J.A.Kemp & Co. 14, South Square Gray's Inn, London,
WC1R 5EU (GB)**

(54) Method of plunger molding and plunger molding apparatus having temperature controlled runner and sprue portions.

(57) A method and apparatus for plunger molding are described. The method comprises the steps of:

a) placing a charge of thermosetting molding material (11) in a transfer cylinder (13),

b) forcing said material, by means of a plunger acting within the confines of said cylinder, through a runner system (17) maintained throughout the molding process at a temperature sufficient to keep molding material therein in a plasticized state, but insufficient to cause any substantial curing thereof, and into a heated closed mold cavity (21) maintained at a temperature sufficiently high to cure said molding material, and

c) removing a molded article of cured thermosetting material from said mold.

The apparatus consists of a transfer cylinder (13) having at least one feed outlet (29) in the base thereof, a plunger movable reciprocally within said cylinder, at least one runner block (31) having a runner channel (17) therein, one end of said runner channel positioned to be aligned with a feed outlet of said cylinder, at least one sprue bushing (19) having an orifice (39) positioned to be aligned with the remaining end of said runner channel (17), and at least one heated mold cavity (21) having a gate (43) positioned to be aligned with the orifice (39) in said sprue bushing (19), the runner block (31) and the sprue bushing (19) having independent temperature controlling means therein.

The molding material within the runner system is maintained in a plasticized, substantially uncured state, in readiness for the next operation of the plunger to again force material through the runner system into the mold cavity, and wastage of molding material is reduced.

BAD ORIGINAL

- 1 -

"METHOD OF PLUNGER MOLDING AND PLUNGER MOLDING
APPARATUS HAVING TEMPERATURE CONTROLLED
RUNNER AND SPRUE PORTIONS"

The present invention relates to a type of transfer molding, namely plunger molding, which is also called auxiliary ram transfer molding. The present invention provides a method and apparatus for plunger molding and makes possible a substantial reduction in the amount of cured waste material.

Transfer molding techniques facilitiate the production of articles of complicated design having close tolerances and specific dimensions. Generally the finishing costs of transfer molded articles are less than the finishing costs of articles produced by other molding methods. Transfer molding techniques are particularly adapted to the production of articles which require inserts to be molded in the finished product.

Plunger molding, a specific form of transfer molding, is an advantageous method of forming articles of thermosetting molding materials, for example, synthetic resins. Transfer molding generally involves the formation of articles of a thermosetting molding material in a closed mold, wherein the molding material is fed under pressure in a hot, plasticized state from a transfer cylinder, or auxiliary chamber, into a heated mold cavity.

Plunger molding differs from other types of transfer molding in that pressure is exerted on the material in the transfer cylinder by an auxiliary ram. The pressure from the auxiliary ram forces the plasticized molding material through one or more runners and sprues into the cavities of a closed heated mold. When the plunger is withdrawn and the mold opened, the cured molded article is removed from the mold cavity along with the cured runner, sprue material and cull. The overall molding cycle in plunger molding is usually shorter than for other types of transfer molding because removal of the cull from the mold does not require a separate operation. Generally, plunger molding is carried out with a two or three plate mold. In order to take maximum advantage of the fast curing cycles that are obtainable in plunger molding operations, it is particularly desirable that preheated molding material, suitable in the shape of preforms, be used as the starting material.

The molding temperatures and pressures that are required to obtain a satisfactory cured molded product must be predetermined for the particular type of thermosetting feed material to be utilized. Generally, temperatures ranging between about 135° and 216° C. (275° to 420° F.) are useful for curing a wide variety of thermosetting feed materials.

Thermosetting molding materials are typically placed in the transfer cylinder in the form of high frequency preheated preforms, pills or extrudates. The action of the auxiliary plunger forces the plasticized feed material through a runner system, one or more sprue bushings and into one or more closed mold cavities.

Although the auxiliary ram, or plunger, method of molding permits a high production with a minimum loss of material in cull as compared to other molding techniques, the amount is substantial and represents, depending upon the article being molded, a waste of about 10 to about 100 percent, and, in extreme cases, over 100 percent of the material utilized in the molded product. It is the goal of the present invention to minimize this waste.

- 3 -

A recent technical advance in the molding art has been the adaptation of the runnerless injection, or cold manifold, process to the injection molding of thermosetting resins. In the cold manifold process, the material in the sprue and manifold system is maintained at a temperature sufficient to keep the material in a plasticized condition, without causing the material to prematurely cure or "set-up". Thus, when a cured part is removed from the mold cavity, the material in the sprue and manifold becomes part of the next molding, instead of being discarded as in conventional injection molding operations. The runnerless injection process, therefore, provides for significant savings in material.

The thermosetting materials usually employed in runnerless injection processes differ in some respects from materials normally employed in conventional injection processes because of the requirements of such process. One significant difference is that runnerless injection molding materials are adapted to remain in a plasticized or fused condition in the feed system for extended periods of time without prematurely curing, that is at between temperatures 104°C. to about 116°C. (220° to 240°F), while also being capable of rapidly curing in the mold cavity at the molding temperature, usually about 170°C. (340°F.). A suitable runnerless injection molding composition comprises a phenol-aldehyde resin component wherein (a) from 55% to 90% of the available theoretical para-phenyl linkages in the resin chain are bridged to a phenyl group, (b) the carbon chains linked between adjacent hydroxyl-substituted phenyl nuclei have 1 to 5 carbon atoms, and (c) the hydroxyl-substituted phenyl nuclei are capable of chain growth at unsubstituted ortho- and para-positions of said nuclei (see U.K. Patent Application No. 79.19670). Although such formulations are useful in the present invention, they are not required, and the molding compositions useful in the present invention may be selected from readily available standard thermosetting molding compositions.

- 4 -

Thermosetting molding materials useful in the present invention may suitably be selected from thermosetting synthetic resins and resin compositions typically used in molding operations, for example, phenolic; amino, such as urea, melamine and melamine/ phenolic; polyester resins in granular, nodular, bulk or sheet forms; alkyd; epoxy; silicone; diallylphthlate; and polyamides, or from thermosetting natural and synthetic rubber compositions. Phenolic resin compositions are especially useful as the molding material. Phenolic resin compositions used in molding operations are usually employed in the form of molding compositions. Phenolic molding compositions are typically particulate in form containing a molding grade phenolic resin, a cross-linking agent, such as hexamethylenetetramine, and suitable filler materials.

Although desirable in principle, the use of runnerless injection molding techniques in plunger molding operations has not been heretofore realized. A number of prior art patents have issued relating to runnerless injection molding, for example: U.S. Patents Nos. 3,520,026; 3,632,729; 3,812,228; 3,876,356; 3,959,433; and 3,961,014. However, none of the proposed cooling systems or techniques are applicable nor effectively employed in plunger molding operations. It is a primary purpose of this invention to provide a method and apparatus for the utilization of runnerless injection techniques in plunger molding operations.

In accordance with the present invention, a preheated thermosetting molding material, suitably a synthetic resin composition such as a phenolic molding composition, is charged into a transfer cylinder. Useful cylinder temperatures are those sufficient to plasticize the molding material but insufficient to cause any substantial curing or setting up of the thermosetting molding material. Generally, temperatures between about 77° and 121°C. (170° to 250°F.), and, more preferably, from about 99° to about 116°C. (210° to 240°F.) are useful for a wide variety of thermosetting molding materials. The plasticized material is then

0010887

- 5 -

forced by the action of a plunger, or piston, traveling within the confines of the cylinder through a temperature controlled runner system, suitably comprised of a runner channel and a sprue bushing, and into a closed, heated mold.

The temperature in the runner system, comprised of one or more runner channels, and may include one or more sprue bushings, is preferably controlled by independent systems consisting of separate reservoirs of circulating fluids. The temperature maintained in the runner channels and in the sprue bushings is sufficient to maintain the thermosetting molding material in a plasticized state, but insufficient to cause any substantial curing or setting up of the material. By substantial curing or setting up of the thermosetting molding material is meant an amount of premature polymerization which would adversely inhibit the plasticity or mobility of the molding material.

The mold cavity is maintained at a temperature sufficiently high to cure the thermosetting molding material within the confines of the mold. After curing, the molded article is removed from the mold. The material within the runner channel and sprue bushing is maintained in a plasticized, substantially uncured state, in readiness for the next shot or operation of the plunger to again force material into the mold cavity.

The present invention will be illustrated and described in greater detail by reference to the attached drawings.

Figure 1 is a sectional view of an apparatus particularly adapted to carry out the present invention. The apparatus shown is of the top ram type. Figure 1 shows the apparatus while the transfer cylinder is being charged and prior to the initial charge of the mold cavities.

BAD ORIGINAL

Figure 2 is a sectional view of the apparatus shown in Figure 1 taken along plane A-A.

Figure 3 is a sectional view of the apparatus of Figure 1 showing the plunger member forcing plasticized thermosetting molding material into the mold cavities.

Figure 4 is also a sectional view of the apparatus shown in Figure 1 showing the molds open and the molded article being removed.

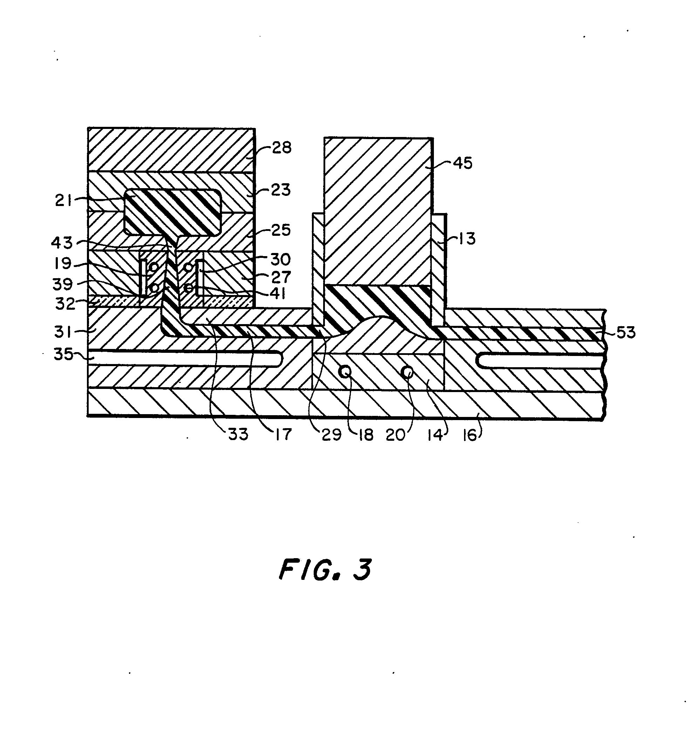

The present apparatus consists of the essential elements of a cylinder such as 13; a plunger, such as 45 as shown in Figure 3, a temperature controlled runner system comprised of one or more runner channels, such as 17, and suitably one or more sprue bushings, such as 19; one or more mold cavities, such as 21, suitably formed by mold halves 23 and 25; and a means of heating the mold cavity to a temperature sufficient to cure the thermosetting molding material, such as heat plates 27 and 28.

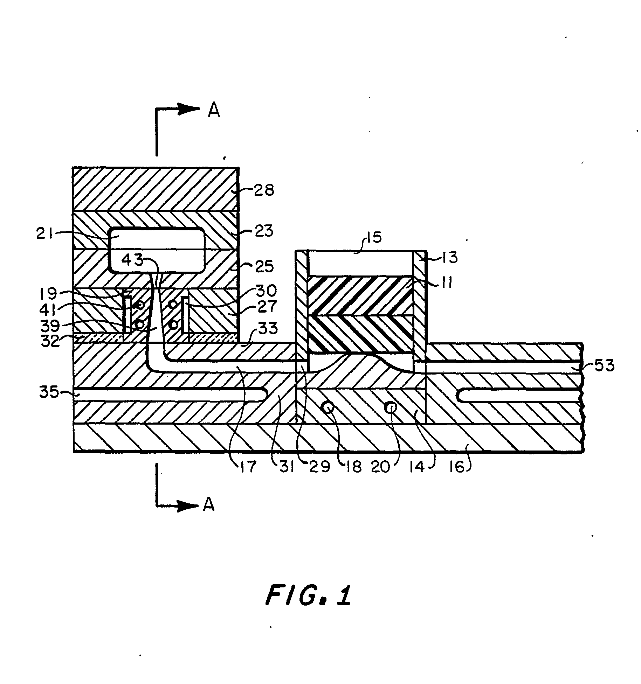

Looking now at Figure 1, thermosetting molding material in the shape of preform or extrudate 11 is placed, suitably by dropping, into empty transfer cylinder through open end 15. Suitably, preforms or extrudates 11 are preheated to a temperature sufficient to plasticize the molding material, but insufficient to cause any substantial curing of the molding material. Temperatures in the range of between about 77° and about 121°C. (170° to 250°F.) and, more preferably, from about 99° to about 116°C. (210° to 240°F.) are generally useful for plasticizing a wide variety of thermosetting molding materials.

In one embodiment of the invention, the closed end of transfer cylinder 13 is suitably positioned atop temperature controlled plate 14 mounted on support plate 16. The temperature of plate 14 is maintained by the circulation of a reservoir of fluid, for example, oil, or more preferably water, through channels, such as, 18 and 20. The temperature in plate 14 is maintained sufficiently high to maintain the molding material in a plasticized state, but insufficient to cure any significant portion of the molding material. Generally such temperatures range between about 77°C. and about 121°C. (170°F. to 250°F.) and more preferably between about 99°C. to about 116°C. (210° to 240°F.).

Transfer cylinder 13 has outlets, such as 29, in the base thereof, positioned to align with runner channels, such as 17. Runner channel 17 is formed in runner block 31, which aptly may consist of block 31 and a removable cover plate 33 to enable cleaning of the runner channel.

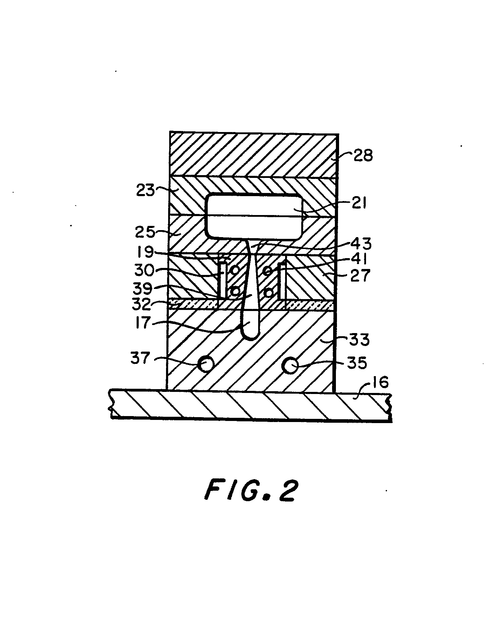

As shown in Figures 1 and 2, runner block 31 has a cooling reservoir which is suitable comprised of channels, such as 35 and 37, which may be in form of a "U" within runner block 31. In such case, one channel, i.e., 35 may be utilized as an inlet, and the other 37, may be utilized as an outlet for the circulation of a fluid reservoir, such as oil, or more preferably and practically, water, through runner block 31. The reservoir maintains a temperature in runner channel 17 which is sufficiently high to maintain the thermosetting molding material in a plasticized state, but insufficient to cure any significant portion of the molding material. Generally, useful temperatures range between about 77° and about 121°C. (170° to 250°F.) and, more preferably between about 99° to about 116°C. (210° to 240°F.).

Runner channel 17 is aligned with orifice 39 in sprue bushing 19. Orifice 39 is tapered from a larger inlet to a narrower outlet. Sprue bushing 19 is cooled by a reservoir of cooling fluid, such as water, preferably circulating through channels, such as 41, which may simply pass through the bushing or may be connected to encircle orifice 39. In order to minimize contact between sprue bushing 19 and heated plate 27, sprue bushing 19 is preferably spool shaped, providing an air space such as 30 between heated plate 27 and the intermediate portions of the sprue bushing. Sprue bushing 19 is cooled to maintain a temperature in orifice 39 comparable to and within the range set forth above for runner channel 17.

Orifice 39 of sprue bushing 19 connects with tapered gate 43 leading to mold cavity 21. Mold cavity 21 is heated by heated plates 27 and 28 to a temperature sufficiently high to cure the thermosetting molding material. Generally, temperatures between about 135° and about 216°C. (275° to 420°F.) are used, and within this range, temperatures between about 149° and about 199°C. (300° to 390°F.) are aptly suited to use to cure a wide variety of thermosetting molding materials. Heated plates 27 and 28 may suitably be heated electrically or by circulation of steam or heated oil within the plates. Heated plate 27 is preferably insulated from runner block 31 by a layer of insulation such as 32, suitably fabricated of insulation board.

Figure 3 shows plunger member 45 acting within the confines of transfer cylinder 13 forces plasticized thermosetting molding material through a temperature controlled runner system comprised of runner channel 17 and sprue bushing 19, and through gate 43 into closed, heated mold cavity 21. Plunger member 45 is suitably actuated hydraulically by means not shown to reciprocate within cylinder 13.

The temperature controlled runner system may in some embodiments be modified so that the plunger feeds through a temperature controlled runner channel directly into a mold gate, for example, into an edge gate, fan gate or tunnel gate, normally incorporated in two or three plate molds.

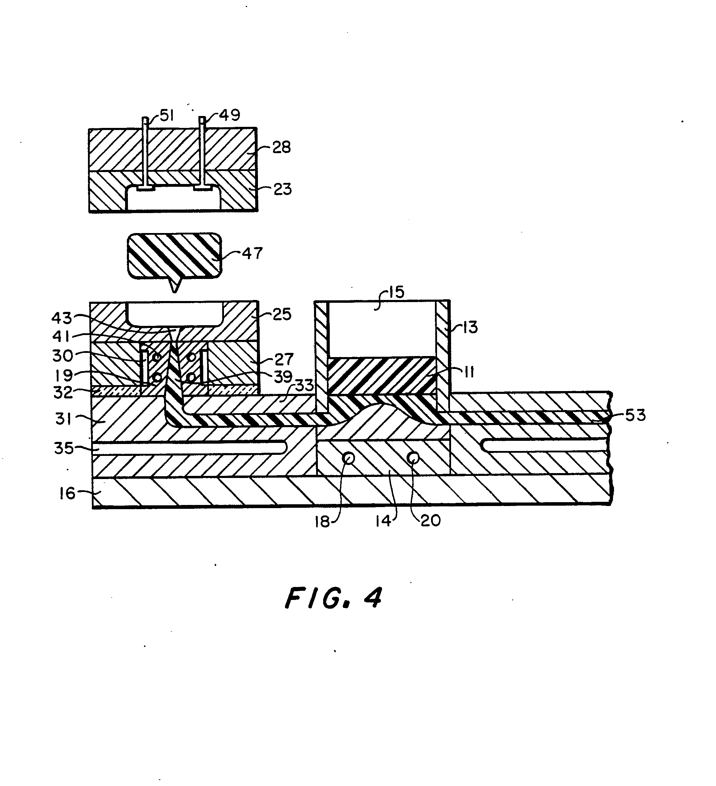

Figure 4 shows mold halves 23 and 25 in an open position. Molded article 47 is removed by the aid of knock-out pins, such as 49 and 51 acting downward. The knock-out pins are suitably actuated by means of a knock-out plate or bar, not shown. The thermosetting molding material is maintained in a plasticized, substantially uncured state in the runner system, runner channel 17 and sprue orifice 39. The only loss is the cured material attached to the molded article and was cured in the gate portion 43.

It will be understood that the present invention provides for the use of a plurality of mold cavities, such as 21, fed by a single transfer cylinder such as 13. The drawings contemplate, but do not show, additional mold capacity fed by additional runner channels, such as 53, positioned around the periphery of the transfer cylinder.

The apparatus components, such as the transfer cylinder, plunger, runner system, mold faces, and heated plates are preferably fabricated of a mold steels stable under the conditions of use.

Although the present invention has been described in terms of a top ram embodiment, it will be appreciated and understood that the invention is equally adapted to and useful in bottom or side-ram embodiments.

The foregoing description and embodiments are intended to illustrate the invention without limiting it thereby. Various modifications may be made in the invention without departing from the spirit or scope thereof.

C L A I M S

1. A method of plunger molding which comprises the steps of:

    a) placing a charge of thermosetting molding material in a transfer cylinder,

    b) forcing said material, by means of a plunger acting within the confines of said cylinder, through a runner system, and into a heated closed mold cavity maintained at a temperature sufficiently high to cure said molding material, and

    c) removing a molded article of cured thermosetting material from said mold,

characterized in that the runner system is maintained throughout the molding process at a temperature sufficient to keep molding material therein in a plasticized state but insufficient to cause any substantial curing thereof.

2. A method according to claim 1 wherein the charge of thermosetting molding material is preheated to a temperature sufficiently high to plasticize said material but insufficient to cure any sufficient portion thereof.

3. A method according to claim 2 wherein the preheated charge of thermosetting molding material is heated to between 77° and 121°C.

4. A method according to claim 1, 2 or 3 wherein the runner system is maintained at a temperature between 77° and 121°C.

5. A method according to any one of the preceding claims wherein the runner system comprises at least one runner channel and an associated sprue bushing, each independently temperature controlled.

0010887

- 11 -

6. A method according to claim 5 wherein the runner channel and sprue bushing are each maintained at a temperature between 77° and 121°C.

7. An apparatus for plunger molding consisting of:

a) a transfer cylinder having at least one feed outlet in the base thereof,

b) a plunger movable reciprocally within said cylinder,

c) at least one runner block having a runner channel therein, one end of said runner channel positioned to be aligned with a feed outlet of said cylinder,

d) at least one sprue bushing having an orifice positioned to be aligned with the remaining end of said runner channel, and

e) at least one heated mold cavity having a gate positioned to be aligned with the orifice in said sprue bushing, characterized in that said runner block has a temperature controlling means therein, and in that said sprue bushing has a temperature controlling means therein.

8. An apparatus according to claim 7 wherein the temperature controlling means in said runner block comprises a reservoir in said block adapted to contain a supply of a liquid and having an inlet and an outlet for circulating liquid through said block.

9. An apparatus according to claim 7 or 8, wherein the temperature controlling means in said sprue bushing comprises a reservoir in said bushing adapted to contain a supply of a liquid and having an inlet and an outlet for circulating liquid through said bushing.

0010887

1/4

FIG. 1

FIG.2

FIG. 3

0010887

4 / 4

FIG. 4

0010887

European Patent Office

**EUROPEAN SEARCH REPORT**

Application number

EP 79 302 192.4

| | **DOCUMENTS CONSIDERED TO BE RELEVANT** | | CLASSIFICATION OF THE APPLICATION (Int. Cl.3) |
|---|---|---|---|
| Category | Citation of document with indication, where appropriate, of relevant passages | Relevant to claim | |
| | CH - A - 400 553 (GOLLER) <br> * complete document * <br> -- | 1 | B 29 F 1/022 <br> B 29 G 3/00 |
| | DE - B - 1 454 929 (ANKERWERK) <br> * complete document * <br> -- | 1 | |
| | US - A - 3 023 458 (SEYMOUR) <br> * complete document * <br> -- | 1 | TECHNICAL FIELDS SEARCHED (Int.Cl.3) |
| | US - A - 3 113 346 (BRIGHT) <br> * complete document * <br> -- | 1 | |
| D | US - A - 3 959 433 (SAUERS) <br> --- | | B 29 F 1/00 <br> B 29 G 3/00 |
| A | DE - B2 - 2 207 001 (TSUTSUMI) <br> -- | | |
| A | DE - B2 - 2 164 219 (UNIROYAL) <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search | Date of completion of the search | Examiner |
| Berlin | 12-02-1980 | KLITSCH |

EPO Form 1503.1 06.78